# EUROPÄISCHE PATENTSCHRIFT

(11) **EP 2 342 534 B1**
(45) Veröffentlichungstag und Bekanntmachung des Hinweises auf die Patenterteilung: **02.10.2013**
(21) Anmeldenummer: 09748713.6
(22) Anmeldetag: 02.11.2009
(51) Int. Cl.: G01C 9/06, G01C 9/32

(54) **ELEKTROOPTISCHES NEIGUNGSMESSSYSTEM**
ELECTRO-OPTICAL INCLINATION MEASUREMENT SYSTEM
SYSTÈME DE MESURE ÉLECTRO-OPTIQUE DE L'INCLINAISON

(30) Priorität: 05.11.2008 DE 102008056005
(43) Veröffentlichungstag der Anmeldung: 13.07.2011
(73) Patentinhaber: Michalski, Carsten, 22547 Hamburg (DE)
(72) Erfinder: Michalski, Carsten, 22547 Hamburg (DE)
(74) Vertreter: Volmer, Jochen
(86) Internationale Anmeldenummer: PCT/EP2009/007831
(87) Internationale Veröffentlichungsnummer: WO 2010/051955

(56) Entgegenhaltungen:
- DE-B- 1 068 196
- DE-U1- 29 703 035
- FR-A- 1 205 985
- JP-A- 2001 039 695
- JP-A- 2004 170 124
- JP-A- 2008 014 893
- US-A1- 2005 178 017

## Beschreibung

Die Erfindung betrifft ein elektrooptisches Messsystem zur Messung einer Neigung, insbesondere zum Senkrechtstellen von Bohrgestängen unter Wasser, mit einer Messvorrichtung zur Neigungsmessung und einer von der Messvorrichtung entfernt angeordneten Anzeigevorrichtung.

Neigungsmesser, Neigungswaagen und andere Neigungsmessgeräte sind im Stand der Technik bekannt. Verschiedene Arten von Neigungssensoren umfassen beispielsweise verschiedene Formen von Libellen, etwa Dosenlibellen oder Röhrenlibellen, und Inklinometer. In ihren Ursprungsformen werden solche Neigungsmessgeräte von Hand bedient und von einer Bedienperson direkt abgelesen.

Für eine Fernablesung oder eine Ablesung unter schwierigen Bedingungen, etwa unter Wasser, sind von Hand zu bedienende Neigungsmesser allerdings nicht oder kaum geeignet. Um fernablesbare Neigungssensoren zur Verfügung zu stellen, die insbesondere auch unter erschwerten Bedingungen einsetzbar sind, sind verschiedene Ansätze bekannt.

Eine elektronische Fern-Wasserwaage ist in DE 103 00 088 A1 beschrieben. Diese weist für eine Fernmessung eine erste Systemkomponente mit einer Horizontal-Libelle und einer Vertikal-Libelle in Orthogonalanordnung auf, mit jeweils einer die Position der Libellen-Gasblasen messenden Neigungs-Messvorrichtung. Auf einer Seite der Libellen sind jeweils auf Höhe der Gleichgewichtslage der jeweiligen Gasblasen ein lichtimitierendes Bauelement angeordnet und auf der anderen Seite zwei Fotosensoren, die je nach der Lage der Gasblase unterschiedlich viel Licht empfangen. Eine zweite Systemkomponente dient zur Fernanzeige der die Neigung einer Fläche repräsentierenden Daten.

In US 5 450 676 A ist ein Neigungsindikator beschrieben, bei dem eine Kugel neigungsabhängig durch einen gebogenen Kanal läuft. An einer Seite des Kanals ist eine Reihe von Lichtquellen angeordnet, an der gegenüberliegenden Seite eine Reihe von Lichtsensoren. Abhängig von der aktuellen Neigung befindet sich die Kugel am momentan tiefsten Punkt des Kanals und verdeckt eine oder mehrere der Lichtquellen. Die Identifikation der verdeckten Lichtquelle dient zur Bestimmung des momentanen Neigungswinkels.

DE 297 03 035 U1 betrifft eine Wasserwaage mit einem Körper, der eine ebene Fläche zum Ausrichten einer Ausrichtfläche aufweist, mindestens einem in diesem Körper befestigten, eine Luftblase aufweisenden Behälter, welcher eine im Wesentlichen senkrecht zur ebenen Fläche verlaufende Längsachse besitzt, und einem am Körper befestigten optischen Übertragungselement, das ein Bild des die Luftblase aufweisenden Behälters auf eine Sichtebene überträgt, die im Wesentlichen parallel zur ebenen Fläche verläuft. Eine Miniaturkamera nimmt ein Bild des die Luftblase aufweisenden Glasröhrchens auf und überträgt es auf einen Schirm, der sich in der Sichtebene der Wasserwaage befindet. Hier ist die Anzeigevorrichtung ein Teil der Wasserwaage.

JP 2008 014893 A betrifft ein Klinometer mit einem sehr schmalen Durchmesser, das in ein Bohrloch absenkbar ist. In seiner Spitze umfasst das Klinometer eine Messvorrichtung, beispielsweise eine Dosenlibelle, eine Beleuchtungsvorrichtung, die die Dosenlibelle illuminiert und eine optische Messvorrichtung, die ein Bild der Dosenlibelle aufnimmt und an eine außerhalb des Bohrlochs angeordnete Anzeigevorrichtung überträgt.

DE 10 68 196 B betrifft eine Bohrlochsonde zur Beobachtung und Vermessung der Wandung eines Bohrlochs. Dabei erfolgt die Übertragung des Bildes von der Sonde zum Beobachter durch eine Fernseheinrichtung, bei der die Fernsehaufnahmekamera einen motorisch angetriebenen, umlaufenden Spiegel aufweist, der ein Bild der Bohrlochwandung und eines Orientierungsanzeigegeräts auf das Objektiv der Fernsehkamera wirft, welches das von ihm entworfene reelle Bild aufnimmt und über ein Kabel mit dem Wiedergabegerät am Erdboden verbindet. Diese Bohrlochsonde hat ein Gehäuse, welches drei oder mehr Fenster aufweist, die es gestatten, den jeweiligen vor den Fenstern befindlichen Wandungsteil zu beobachten.

FR 1 205 985 A betrifft eine Vorrichtung zur Anhebung von Eisenbahnschienen und zur Nivellierung derselben mittels eines mobilen Hebeapparats, die eine Messvorrichtung aufweist, die aus einer Dosenlibelle besteht, auf die eine Fernsehkamera gerichtet ist. Der Lokführer kann das Bild der Fernsehkamera an seinem Standort überwachen.

JP 2001 039695 A betrifft einen Gabelstapler, bei dem die Gabel an einem verschwenkbaren Auslegerarm angebracht ist. Zur Nivellierung der Gabel weist der vordere Teil einen Neigungssensor und eine CCD-Kamera auf, die den Neigungssensor erfasst. Das erfasste Bild wird auf einem Monitor im Führerhaus des Gabelstaplers angezeigt. Die Neigungsanzeige wird durch einen Bildanalysator analysiert und eine automatische Nivellierung der Zinken des Gabelstaplers erreicht.

JP 2004 170124 A betrifft eine Vorrichtung und ein Verfahren zur Bestimmung einer vertikalen Position, insbesondere für große Gebäude, Dämme usw., wobei von einem Referenzpunkt die Vorrichtung an einem Draht mittels eines Gewichtes herabgelassen wird. Die Vorrichtung umfasst ein Bilderfassungsmittel, um in der vertikalen Richtung Aufnahmen zu machen, während sie mit dem Gewicht zusammen an dem Draht schwingt. Die Bilder werden an eine entfernt angeordnete Anzeigevorrichtung übermittelt. Außerdem umfasst die Vorrichtung ein Anzeigemittel, um eine vertikale Position in einem Bereich anzuzeigen, das von der Bilderfassungsvorrichtung fotografiert worden ist. Hierzu ist am Boden ein Fadenkreuzraster angebracht, das aufgenommen wird. Außerdem schwingt mit der Vorrichtung ein zweites Fadenkreuzraster mit.

Ausgehend von diesem Stand der Technik ist es die der vorliegenden Erfindung zugrunde liegende Aufgabe, ein Messsystem bereitzustellen, das einfach und wiederholbar präzise herstellbar ist und das auch unter schwierigen Bedingungen einsetzbar ist, wenn der Neigungssensor nicht mit bloßem Auge betrachtet werden kann. Das erfindungsgemäße Messsystem soll außerdem insbesondere unter Wasser einsetzbar sein, beispielsweise bei dem Einrammen von Rammpfählen.

Die der Erfindung zugrunde liegende Aufgabe wird gelöst durch ein elektrooptisches Messsystem zur Messung einer Neigung mit einer Messvorrichtung zur Neigungsmessung und einer von der Messvorrichtung entfernt angeordneten Anzeigevorrichtung, wobei die Messvorrichtung als Messkomponenten wenigstens eine Neigungsanzeigevorrichtung und wenigstens eine auf die Neigungsanzeigevorrichtung gerichtete optische Bilderfassungsvorrichtung umfasst, wobei auf der Anzeigevorrichtung ein von der Bilderfassungsvorrichtung erfasstes Bild der Neigungsanzeigevorrichtung anzeigbar ist, wobei die Messvorrichtung ein Gehäuse und vorzugsweise einen gemeinsamen Rahmen umfasst, das die Neigungsanzeigevorrichtung und die Bilderfassungsvorrichtung umschließt oder in dem die Neigungsanzeigevorrichtung und die Bilderfassungsvorrichtung angeordnet sind, wobei das Messsystem dadurch weitergebildet ist, dass die in dem Gehäuse und/oder dem gemeinsamen Rahmen angeordneten Messkomponenten von dem Gehäuse oder Rahmen oder einer Vorrichtung, an der das Gehäuse oder der Rahmen befestigt ist, erschütterungsdämpfend entkoppelt sind, wobei eine Positionierungsvorrichtung vorgesehen ist, mittels deren die Messkomponenten in eine Messposition bringbar sind, wobei die Positionierungsvorrichtung zur Positionsdefinition mit dem Gehäuse verbundene Standfüße und eine Bodenplatte mit Aufnahmen für die Standfüße aufweist, wobei die Aufnahmen eine Zwangsführung für die Standfüße darstellen.

Das erfindungsgemäße Messsystem hat den Vorteil, eine einfache und bekannte Technik anzuwenden, die auch unter schwierigen Bedingungen erprobt und ausfallsicher ist. Es ist nicht notwendig, Computer einzusetzen, von denen bekannt ist, dass sie unter widrigen Bedingungen zu Ausfällen neigen, wenn auch ein Einsatz von Computern erfindungsgemäß nicht ausgeschlossen ist. Besonders widrige Bedingungen für den Einsatz von Computern herrschen beispielsweise auf Baustellen, wo die eingesetzten Vorrichtungen Schmutz, Staub, Lärm und Vibrationen widerstehen müssen. Bei Neigungsmessungen unter Wasser oder in moorigen oder schlammigen Umgebungen kommen Feuchtigkeit und Schlamm erschwerend für die Ausrüstung hinzu.

Vorteilhafterweise ist das erfindungsgemäße Messsystem beispielsweise beim Ausrichten von Bohrgestängen bei Unterwasser-Bohrungen, bei Standkränen, bei selbstfahrenden Mobilkränen bzw. Selbstfahrkränen anzuwenden, wobei beispielsweise die Messvorrichtung an oder in der Nähe des Hakens bzw. einer auszutarierenden Last angeordnet ist, wobei die Anzeigevorrichtung im Haus des Kranführers angeordnet ist.

Da das Bild der Neigungsanzeigevorrichtung direkt auf die Anzeigevorrichtung übertragen wird, kann eine Bedienperson, die sich mit den Instrumenten auskennt, die Anzeige genauso lesen und verstehen, als wenn er sie selbst bedienen würde. Damit entfällt weiteres Training und weitere Schulungen. Bedienpersonen sind beispielsweise Bohrführer und Kranführer.

Eine vorteilhafte Anwendung des erfindungsgemäßen elektrooptischen Messsystems ergibt sich bei der Neigungsbestimmung von Rammkonstruktionen. Wenn im Offshore-Bereich Windenergieanlagen aufgestellt werden, stehen diese auf Rammpfählen und einer Unterkonstruktion. Diese Unterkonstruktion dient auch zum Führen der Rammpfähle. Um zu überprüfen, ob die Unterkonstruktion waagerecht steht, wird in Rammpausen festgestellt, ob sich die Unterkonstruktion geneigt hat. Die Rammpfähle haben einen Durchmesser von derzeit ca. 3,30 m und werden mit einer Kraft von ca. 190 Tonnen in den Boden gerammt. Beim Rammen dieser Rammpfähle treten starke Vibrationen in der Unterkonstruktion auf.

Um unter diesen Bedingungen messen zu können, ist die erfindungsgemäße elektrooptische Messeinheit, insbesondere ein Gehäuse und/oder Rahmen der Messeinheit, fest mit der Unterkonstruktion verbunden, beispielsweise verschweißt. Die in dem Gehäuse und/oder Rahmen eingeschlossenen bzw. angeordneten Messkomponenten, insbesondere die Neigungsanzeigevorrichtung und die Bilderfassungsvorrichtung, sind von dem Gehäuse, dem Rahmen bzw. der Unterkonstruktion entkoppelt, insbesondere vorzugsweise sind diese Komponenten in einem Magnetfeld suspendiert, schwimmen, insbesondere gekapselt, in Öl und/oder werden mit Federn in Position gehalten. Es ist eine Positionierungsvorrichtung vorgesehen, mittels deren die Komponenten in eine Messposition bringbar sind.

Vorzugsweise weist die Positionierungsvorrichtung eine schaltbare Betätigungsvorrichtung, insbesondere einen herausfahrbaren Stempel oder einen Elektromagneten, auf, mittels dessen das Gehäuse bewegbar ist. In einer Alternative drückt ein herausfahrbarer Stempel in den Rammpausen die Kapsel in die Messposition, um die Messung einzuleiten. In einer Alternative wird eine Kombination eines Elektromagneten mit einem Permanentmagneten hierzu verwendet.

Vorteilhafterweise weist die Positionierungsvorrichtung zur Positionsdefinition mit dem Gehäuse verbundene Standfüße, die insbesondere justierbar sind, und eine Bodenplatte mit, insbesondere kegelförmigen, Aufnahmen für die Standfüße auf, wobei die Aufnahmen eine Zwangsführung für die Standfüße darstellen.

Vorzugsweise umfasst die Neigungsanzeigevorrichtung eine Libelle, insbesondere eine Dosenlibelle oder eine Röhrenlibelle, oder einen Inklinometer oder ist eine solche Libelle oder ein Inklinometer. Diese, vorwiegend mechanischen, Komponenten sind ausfallsicher auch unter schwierigen Bedingungen verwendbar und sind den Bedienpersonen bereits aus der Benutzung per Hand bekannt, so dass diese aus dem angezeigten Bild der Neigungsanzeigevorrichtung die momentane Neigung zuverlässig ablesen können, wobei elektronische Fehler ausgeschlossen sind.

Vorzugsweise hat eine erfindungsgemäße Libelle eine Anzeigegenauigkeit von 20', insbesondere von wenigstens 30', ferner insbesondere von wenigstens 1°. Die Angaben 20', 30' und 1° ° bedeuten 20 bzw. 30 Bogenminuten bzw. 1 Grad, wobei eine Bogenminute 1/60 eines Grads ist, 20' und 30' sind somit ein Drittel bzw. die Hälfte eines Grads.

Vorzugsweise umfasst oder ist die optische Bilderfassungsvorrichtung eine optische Kamera oder eine Infrarot-Kamera. Eine solche Kamera gibt beispielsweise ein PAL-Signal heraus, das von jedem handelsüblichen Monitor bzw. Bildschirm direkt wiedergegeben werden kann. Das Signal ist alternativ ein RGB- oder ein sonstiges übliches Bildsignal, das von Computern bzw. Computer-Bildschirmen verarbeitet und angezeigt werden kann.

Alternativ ist die optische Bilderfassungsvorrichtung vorteilhafterweise zur Erfassung von Einzelbildern im optischen oder Infrarot-Bereich ausgebildet, wodurch eine höhere Auflösung des Bildes erreichbar ist. Dies führt zu einer genaueren Ablesbarkeit der Messung.

Weiter ist vorzugsweise vorgesehen, dass die Messvorrichtung eine auf die Neigungsanzeigevorrichtung gerichtete Lichtquelle, insbesondere für sichtbares Licht oder Infrarot-Licht, umfasst, die insbesondere in oder an der Bilderfassungsvorrichtung angeordnet ist. Damit kann die Neigungsanzeigevorrichtung auch in einer dunklen oder kalten Umgebung, beispielsweise unter Wasser, beleuchtet werden.

Vorteilhafterweise ist die Anzeigevorrichtung zur Speicherung von Einzelbildern und/oder von Bild- oder Filmsequenzen ausgebildet oder mit einer Vorrichtung zur Speicherung von Einzelbildern und/oder von Bild- oder Filmsequenzen verbunden. In diesem Fall ist es möglich zu dokumentieren, dass ein Bohrgestänge mit einer von beispielsweise einer Dosenlibelle abzulesenden Präzision in eine Senkrechte gebracht worden ist. Falls dies nicht möglich oder nicht gewünscht ist, wird dokumentiert, unter welchem Winkel die Ausrichtung erfolgt ist.

Eine vorteilhafte sichere Signalübermittlung und Stromversorgung der Messvorrichtung erfolgt, wenn wenigstens ein elektrisches Kabel zur Stromversorgung der Bilderfassungsvorrichtung und/oder Lichtquelle und/oder zur Signalweiterleitung von der Bilderfassungsvorrichtung an die Anzeigevorrichtung vorgesehen ist. Alternativ kann vorgesehen sein, dass eine drahtlose Signalverbindung zwischen der Messvorrichtung und der Anzeigevorrichtung hergestellt wird oder besteht und/oder dass, die Messvorrichtung eine eigenständige Stromversorgung aufweist, insbesondere mittels wenigstens einer Batterie oder wenigstens eines Akkumulators. Während eine drahtlose Kommunikation den Vorteil einer größeren Flexibilität hat, ist eine drahtgebundene Signalübertragung weniger störungsanfällig. Insbesondere bei Einsatz der Messvorrichtung unter Wasser ist eine drahtlose Signalübertragung kaum möglich.

In einer vorteilhaften Weiterbildung ist vorgesehen, dass wenigstens ein Kabel mit einem Kern oder einer inneren Schutzhülle aus einem zugfesten Material, insbesondere Kevlar, versehen ist. Mittels des zugfesten Kabels kann die Messvorrichtung nach ihrem Einsatz geborgen werden. Die Zugkraft eines solchen Zugseiles, das gleichzeitig als Datenkabel dient, beträgt beispielsweise 300 Kilogramm.

Einen vorteilhaften Schutz gegen Staub und/oder Wasser für einen Unterwassereinsatz bietet das Messsystem, wenn die Messvorrichtung ein, insbesondere druckfestes und/oder flüssigkeitsdichtes, Gehäuse umfasst, das die Neigungsanzeigevorrichtung und die Bilderfassungsvorrichtung, und insbesondere die Lichtquelle umschließt. Geeignete Gehäuse bestehen aus Metall oder hartem Kunststoff, es kann sich jedoch auch um eine Hülle aus ausgehärtetem Gießharz oder ähnlichen geeigneten Materialien handeln. Das Material wird so gewählt, dass es den Einsatzbedingungen standhält.

Vorzugsweise weist das Gehäuse einen Deckel auf, der mittels Bolzen mit dem Gehäuse verschraubbar ist. Ein solches Gehäuse kann geöffnet werden, um beispielsweise Kalibrier-, Reparatur- oder Wartungsarbeiten auszuführen.

Vorteilhafterweise sind die Bolzenköpfe verklebt und/oder versiegelt. Damit wird Missbrauch vorgebeugt, insbesondere, wenn die erfindungsgemäßen Messvorrichtungen von anderen Personen benutzt werden als denen, die die Messvorrichtungen warten. Weiterer Schutz vor Missbrauch und Dekalibrierung wird erzielt, wenn ein Schutzdeckel auf dem Deckel vorgesehen ist, der insbesondere mittels eines Sicherheitsschlosses verschließbar ist.

Im Gehäuse ist ferner vorteilhafterweise vorgesehen, die Bilderfassungsvorrichtung und die Neigungsanzeigevorrichtung mittels einer Stoßsicherung, beispielsweise einer Gummistoßsicherung, vor Erschütterungen und Dejustierung durch Erschütterungen zu schützen.

Im Folgenden werden weitere erfindungsgemäße und vorteilhafte Verwendungen des erfindungsgemäßen elektrooptischen Messsystems beschrieben.

Taucher haben unter Wasser Schwierigkeiten, Entfernungen zu messen. Da die ungefähre Länge einer zu messenden Entfernung meistens bekannt ist, wird eine teleskopierbare Nivellierlatte verwendet. Das erfindungsgemäße elektrooptische Messsystem wird vorteilhafterweise auf der Oberseite der als Nivellierlatte ausgebildeten Messvorrichtung angebracht. Sie zeigt über Wasser an, ob die Messvorrichtung waagerecht ausgerichtet ist, so dass der Taucher von der Oberfläche her angewiesen werden kann, wie die Position der Messvorrichtung zu verändern ist. Der Taucher kann anschließend ein teleskopierbares Stück der Messvorrichtung herausziehen, bis beide Enden gegen das zu messende Objekt stoßen.

Eine weitere vorteilhafte Verwendung des erfindungsgemäßen elektrooptischen Messsystems betrifft eine Neigungsmessung bei Primärstützen, die häufig eine Länge von 10 bis 20 m haben und in den Boden einbetoniert werden. Primärstützen sind im Allgemeinen rohrförmige Elemente der sogenannten Deckelbauweise, die vielfach für Verkehrstunnel, Geschäftsbauten und Tiefgaragen mit mehreren Geschossen eingesetzt wird. Es ist häufig nicht bekannt, ob die Primärstützen im Lot stehen, oder in welche Richtung das untere Ende der Primärstütze ausgewandert ist.

In einem solchen Fall wird das erfindungsgemäße elektrooptische Messsystem an einem Schlitten befestigt, auf dem er an der Primärstütze hinunter gleiten kann. Aufgrund der Neigung der Primärstütze läuft der Schlitten unter Umständen nicht gerade, sondern spiralförmig an der Primärstütze herunter. Der Schlitten weist eine Lichtquelle auf, die nach oben strahlt, beispielsweise in Form einer LED. Diese befindet sich in einer Achse mit der Neigungsanzeigevorrichtung. Auf dem oberen Rand der Primärstütze ist eine optische Lotvorrichtung angeordnet, so dass eine Verdrehung des Schlittens bestimmt werden kann.

Eine weitere vorteilhafte Verwendung findet das erfindungsgemäße elektrooptische Messsystem bei der Neigungsmessung von aufgehängten Lasten, etwa im Einsatz von Lasthubschraubern. Hubschrauberpiloten wissen oft nicht, wie ihre Last unter dem Hubschrauber schwingt. Das Messsystem wird im Bereich des Hakens, an dem die Last aufgehängt ist, angeordnet und die Messdaten per Funk oder über ein Signalkabel übertragen. Das Messgerät kann mit einer eigenen Energieversorgung oder über ein am Lastkabel entlang geführtes Kabel mit Strom versorgt werden. Alternativ oder zusätzlich dazu kann das oder ein erfindungsgemäßes Messsystem auch an der Last selbst angeordnet sein, so dass der Pilot oder ein Lasttechniker an Bord die Neigung und gegebenenfalls die Ausrichtung der Last zum Hubschrauber überprüfen und notfalls korrigieren kann.

Die Erfindung wird nachstehend ohne Beschränkung des allgemeinen Erfindungsgedankens anhand eines Ausführungsbeispiels unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Querschnittsdarstellung durch eine gattungsgemäße Messvorrichtung,
- Fig. 2: eine schematische Darstellung einer gattungsgemäßen Messvorrichtung mit einem Winkelhalter,
- Fig. 3a, 3b: schematische Ansichten eines Bohrgestänges mit einer gattungsgemäßen Messvorrichtung,
- Fig. 4: eine seitliche Darstellung der Messvorrichtung gemäß Fig. 3,
- Fig. 5: eine schematische Darstellung eines weiteren gattungsgemäßen Messsystems und
- Fig. 6: eine schematische Darstellung eines weiteren erfindungsgemäßen Messsystems.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

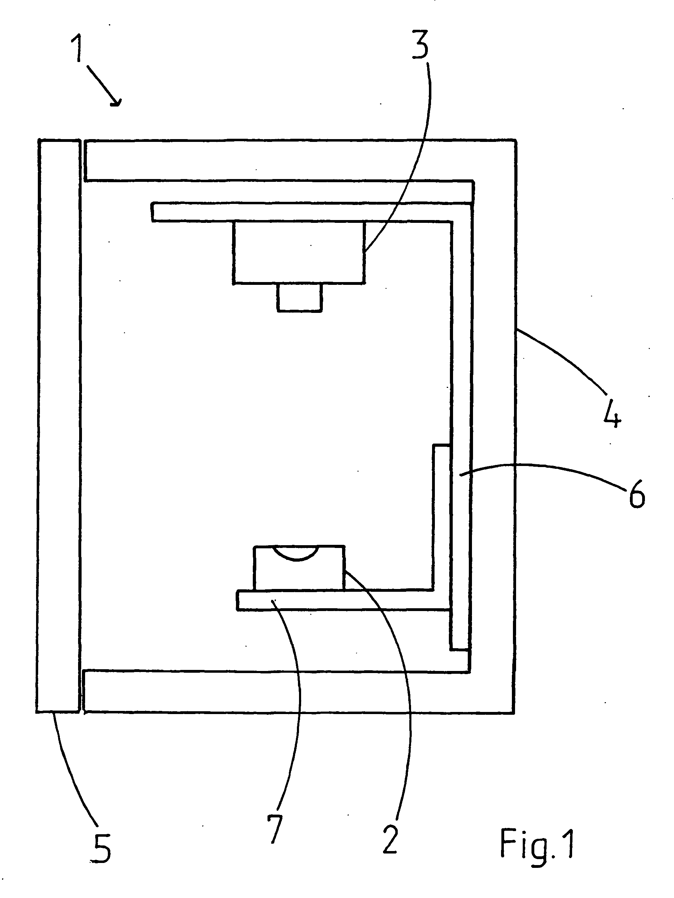

In Fig. 1 ist eine gattungsgemäße elektrooptische Messvorrichtung 1 schematisch im Schnitt dargestellt. Ein Gehäuse 4, das als Druckkörper dient, ist mittels eines Deckels 5 druck- und flüssigkeitsdicht abgeschlossen. An zwei Winkelträgern 6, 7 sind jeweils eine Dosenlibelle 2 und eine Kamera 3 fest angeordnet. Die Kamera 3 ist auf die Dosenlibelle 2 ausgerichtet. Die Dosenlibelle 2 füllt das Blickfeld bzw. das Bild der Kamera 3 möglichst vollständig aus. Insbesondere die Dosenlibelle 2 ist mit dem Gehäuse 4 fest und/oder justierbar verbunden, um eine Dekalibrierung der Messvorrichtung 1 bei unsanfter Behandlung zu vermeiden und/oder zu beheben. Auch die Kamera 3 ist vorzugsweise fest mit dem Gehäuse 4 verbunden, damit die Kamera 3 die Dosenlibelle 2 auch bei unsanfter Behandlung nicht aus dem Blickfeld verliert. Eine erfindungsgemäße Messvorrichtung 1 eines erfindungsgemäßen Messsystems hat ein Gewicht von einigen Kilogramm, beispielsweise ca. 5 Kilogramm.

Nicht dargestellt sind der Übersichtlichkeit halber elektrische Leitungen, die mittels Steckkontakten in der Wand des Gehäuses 4 nach außen geführt werden. Die Messvorrichtung 1 ist somit ein abgekapseltes System, das mittels geeigneter Stecker bzw. Steckverbindungen an eine entfernt angeordnete Anzeigevorrichtung angeschlossen werden kann.

Bei der Kamera 3 handelt es sich beispielsweise um eine Infrarot-Kamera mit integrierter Infrarot-Lichtquelle. Insbesondere für den Einsatz unter Wasser bietet diese Lösung den Vorteil, dass im druck- und flüssigkeitsdicht abgeschlossenen Gehäuse 4 der Messvorrichtung 1 eine Lichtquelle zur Verfügung steht. Da beim Einsatz unter Wasser ein starker Wärmeaustausch der Messvorrichtung 1 mit dem umgebenden Wasser stattfindet, würde eine Infrarotkamera ohne Lichtquelle in der Messvorrichtung 1 keine Unterschiede in der Wärmestrahlung bzw. Infrarotstrahlung erkennen können, da alle Komponenten sehr bald die gleiche Temperatur aufweisen würden und sehr ähnliche und nur sehr geringe Mengen an Infrarotstrahlung aussenden würden.

Für einen Einsatz im Trockenen kann die Messvorrichtung 1 auch mit einer Sendeeinheit zur drahtlosen Übertragung der Bildsignale der Kamera 3 ausgestattet sein und gegebenenfalls mit einer eigenen Stromquelle.

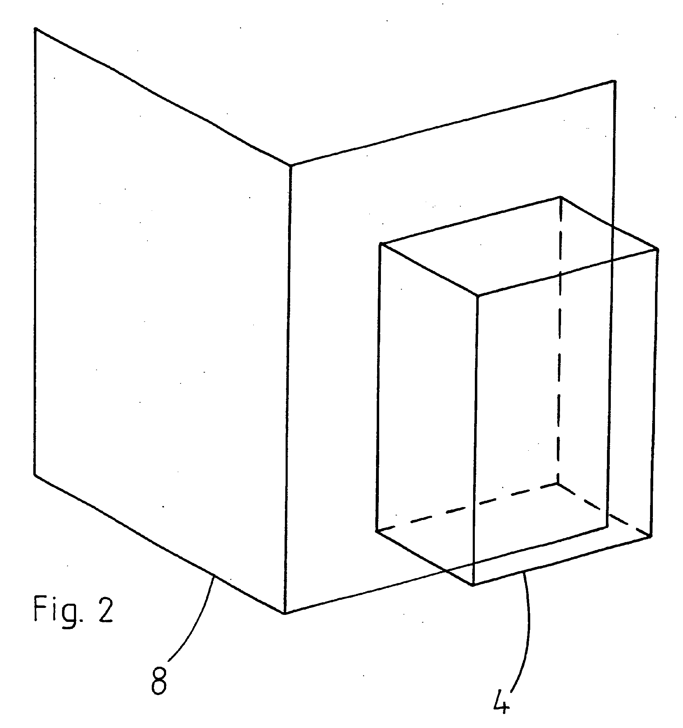

In Fig. 2 ist in schematischer Darstellung gezeigt, dass das Gehäuse 4 des Messsystems bzw. der Messvorrichtung 1 an einem Winkelträger 8 angebracht ist, nämlich an einer Seite eines Winkelträgers 8. Der Winkelträger 8 erlaubt eine präzise Ausrichtung der Messvorrichtung 8. Anstelle eines rechteckigen Gehäuses 4 kann auch eine andere Form vorgesehen sein, beispielsweise ein flachzylindrisches Gehäuse. Zusammen mit einem Gegenstück, insbesondere einem weiteren Winkelstück, ist der Winkelträger 8 als Schlitten auf einem Bohrgestänge lösbar fixierbar.

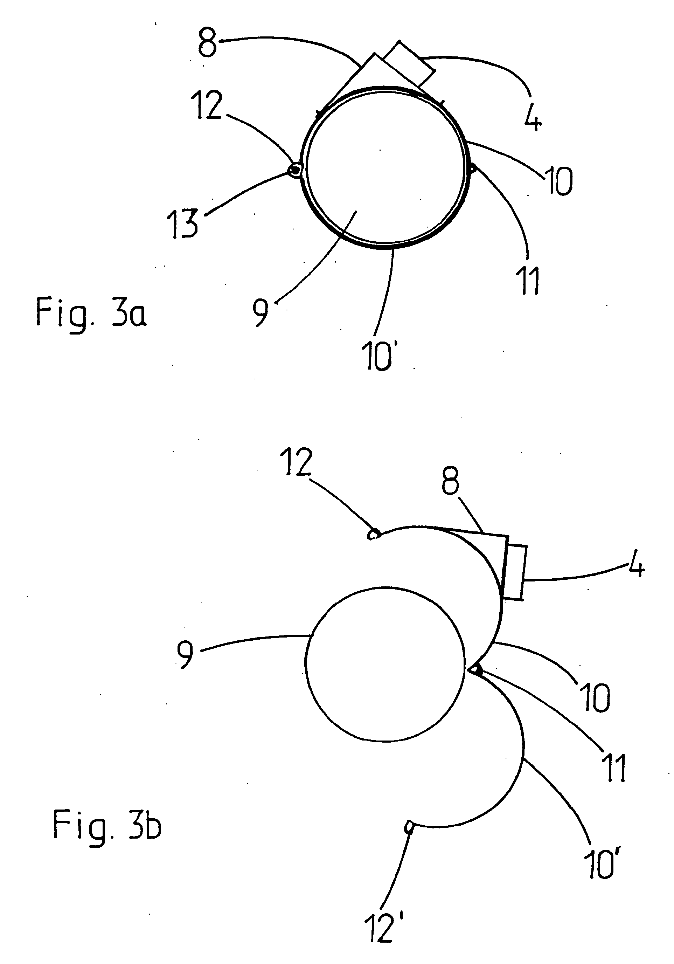

In den Figuren 3a und 3b sind zwei Darstellungen des Winkelträgers 8 mit einem Gehäuse 4 der gattungsgemäßen Messvorrichtung 1 im eingebauten Zustand schematisch dargestellt. Der Winkelträger 8 ist an einem Arm eines Schlittens 10, 10' mittels Nieten oder Schrauben befestigt. Der Schlitten 10, 10' besteht aus zwei halbzylindrischen Armen, die in einem Scharniergelenk 11 miteinander drehbar verbunden sind.

Am gegenüberliegenden Ende weisen die Schlittenarme 10, 10' Ösen 12 auf, die zusammen einen Kanal bilden, durch den ein Stift 13 geführt ist, der die beiden Hälften des Schlittens 10, 10' zusammenhält. Die Messvorrichtung kann unter ihrem eigenen Gewicht mittels des Schlittens 10, 10' am Bohrgestänge 9, das von dem Schlitten 10, 10' umschlossen ist, herabgleiten.

Typische Bohrgestänge 9 haben einen Durchmesser von ca. 15 cm. Ein geeigneter Schlitten 10, 10' hat eine Länge von bis zu 50 cm. Zwischen Bohrgestänge 9 und Schlitten 10, 10' herrscht ein Spalt von vorzugsweise weniger als 1 bis 2 mm.

In Fig. 3b ist eine Situation dargestellt, in der der Stift 13 aus den Ösen 12, 12' entfernt wurde. Der Schlitten öffnet sich und kann vom Bohrgestänge 9 entfernt werden. Zur Öffnung der Arme des Schlittens 10, 10' kann beispielsweise eine Feder am Orte des Scharniergelenks 11 vorgesehen sein, die im geschlossenen Zustand des Schlittens 10, 10' vorgespannt ist.

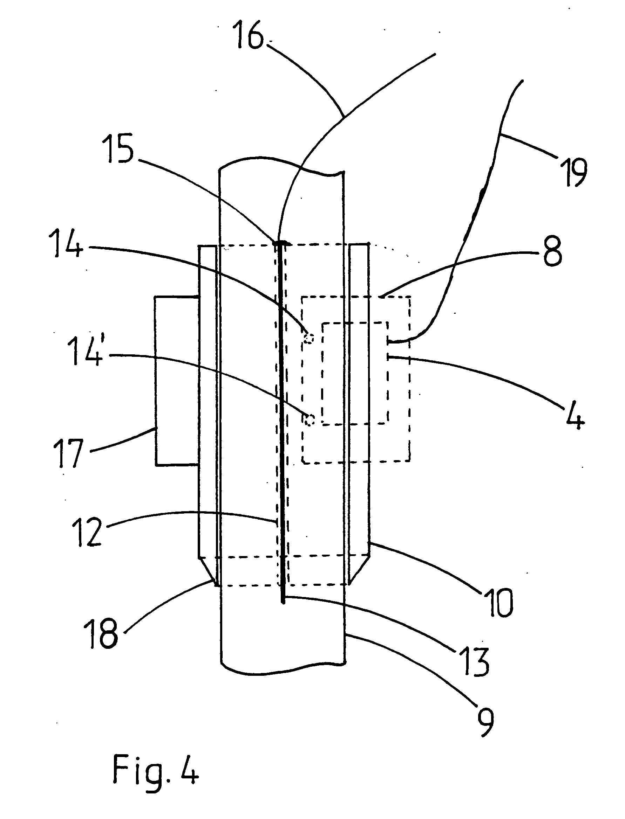

In Fig. 4 ist der Schlitten 10, 10' aus Fig. 3 in einer Seitenansicht schematisch dargestellt. Mit durchgezogenen Linien sind die Außenkonturen des Schlittens 10, 10' dargestellt. Am unteren Ende weist der Schlitten eine Abstreifkante 18 auf, mittels der beim Herabgleiten des Schlittens 10, 10' am Bohrgestänge 9 Schmutz oder Schlamm vom Bohrgestänge 9 abgestreift wird. Das Gesamtgewicht von Schlitten 10, 10' und Messvorrichtung 1 beträgt ca. 20 kg.

In der Mitte ist mit vertikalen gestrichelten Linien der Verlauf der Verbindungsösen 12, 12' dargestellt, die zusammen einen durchlaufenden Kanal bilden, durch den ein Stift 13 verläuft. Dieser steht am unteren Ende etwas über. Am oberen Ende ist der Stift 13 mittels eines Stiftkopfes 15 vor dem Durchrutschen gesichert. Am Stiftkopf 15 ist ferner eine Zugleine 16 befestigt, mittels der der Stift 15 aus dem Kanal der Verbindungsösen 12, 12' herausgezogen werden kann, um den Schlitten freizugeben.

Ebenfalls gestrichelt sind das Gehäuse 4 bzw. der Druckkörper der Messvorrichtung 1 auf dem Winkelträger 8 dargestellt, der mittels Schrauben 14, 14' am Schlitten 10, 10' befestigt ist.

Auf der gegenüberliegenden Seite zum Winkelträger 8 und dem Gehäuse 4 ist ein Gegengewicht 17 dargestellt. Mittels des Gegengewichtes 17 wird die Lastenverteilung auf dem Schlitten 10, 10' im Gleichgewicht gehalten, so dass sich der Schlitten 10, 10' nicht auf dem Bohrgestänge 9 verkantet und einen systematischen Messfehler einführt.

Ebenfalls ist dargestellt, dass zum Gehäuse 4 ein Zugseil und Signal-/Versorgungskabel 19 führt. Dieses dient dem doppelten Zweck, die Signale der Kamera 3 in der Messvorrichtung 1 an eine entfernt angeordnete Anzeigevorrichtung weiterzuleiten und nach dem Lösen der Verbindung durch Ziehen des Stiftes 15 aus den Ösen 12 mittels der Zugleine 16 den Schlitten 10, 10' mit der Messvorrichtung 1 zur Oberfläche zurückzuholen.

Der Schlitten kann eine oder mehrere Klemmen innerhalb der Arme 10, 10' aufweisen, die geöffnet sind, solange der Schlitten 10, 10' sich an einem Bohrgestänge herabbewegt. Ein Hebelmechanismus, der aktiviert wird, sobald ein Tastarm auf dem Untergrund aufsetzt, spannt, insbesondere mittels Federkraft, den oder die Klemmen gegen das Bohrgestänge, so dass der Schlitten auf dem Bohrgestänge arretiert wird. Da die Federn oder anderen mechanischen Elemente, die die Klemmen arretieren, sich von innen gegen die Arme 10, 10' abstützen, wird auch die Klemmung bzw. Arretierung gelöst, wenn der Stift 15 gezogen wird.

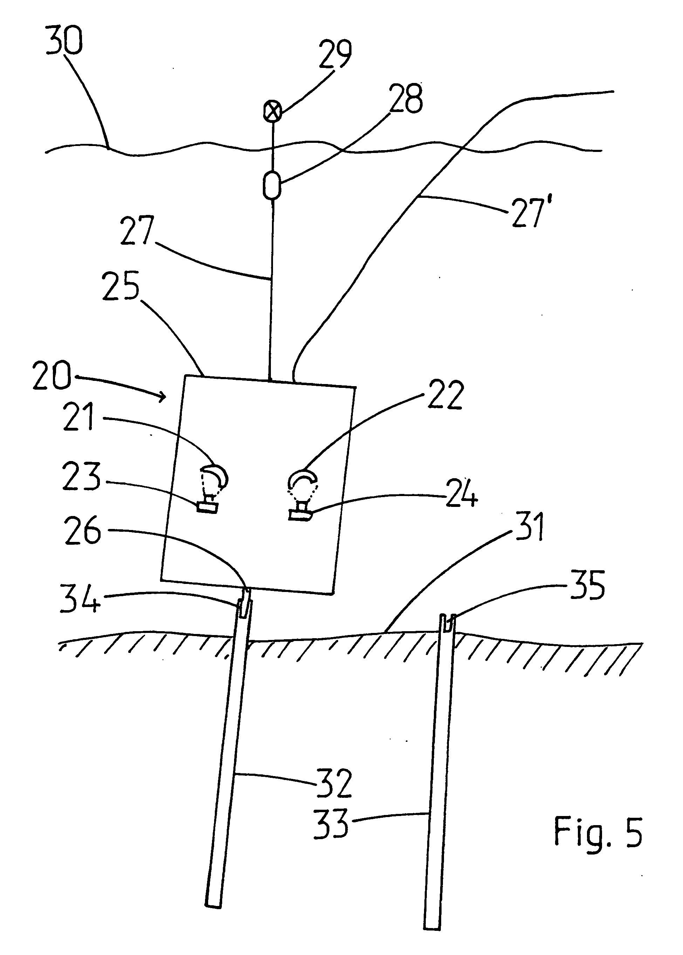

In Fig. 5 ist ein weiteres Beispiel eines gattungsgemäßen Messsystems 20 dargestellt. In diesem Fall sind unter einer Wasseroberfläche 30 bereits Gewindestangen 32, 33 im Boden 31 des Gewässers eingebracht worden, deren Neigung nachträglich bestimmt werden muss. Dies wird mittels der dargestellten Messvorrichtung 20 getan.

Die Gewindestangen 32, 33 weisen an ihrem aus dem Boden 31 bzw. Untergrund ragenden Ende Gewindebohrungen 34, 35 auf, die konzentrisch mit den Symmetrieachsen der Gewindestangen 32, 33 sind. In diese Gewindebohrungen 34, 35 kann mittels eines Gewindezapfens 26 an einem Gehäuse 25 der Messvorrichtung 20 die Messvorrichtung 20 konzentrisch auf einer Gewindestange 32 angebracht werden. Anstatt Gewindebohrungen 34, 35 können die Gewindestangen 32, 33 auch Außengewinde aufweisen, auf die Innengewinde-Zapfen von Messvorrichtungen 20 geschraubt werden. Im Gehäuse 25 der Messvorrichtung 20 sind zwei Inklinometer 21, 22 angeordnet, die zueinander in einem rechten Winkel stehen, um unabhängige Messungen der Neigung der Messvorrichtung 20 in zwei zueinander orthogonalen Richtungen zu ermöglichen. Auf jedes der Inklinometer 21, 22 ist eine eigene Kamera 23, 24 gerichtet, die ein Bild des Inklinometers 21, 22 überträgt. Die Übertragung findet über ein Signalkabel 27' statt. Die Zugleine und das Daten- bzw. Signalkabel 27' kann bzw. können von einer oberflächenbeständigen Haspel (nicht dargestellt) abgespult werden.

An der Oberseite des Gehäuses 25 ist zentral eine Lotleine 27 angebracht, die mittels einer Auftriebsboje 28 senkrecht gehalten wird. Die Auftriebsboje 28 bewegt sich geringfügig mit dem Wellengang, markiert im Mittel jedoch die Position der Mitte der Oberseite der Messvorrichtung 20.

Die Auftriebsboje 28 ist oberhalb der Wasseroberfläche 30 mit einem Prisma 29 versehen, das einer Ortsbestimmung der Auftriebsboje 28 und damit der Mitte der Oberseite des Gehäuses 25 der Messvorrichtung 20 dient. Mit der Kenntnis der in den Inklinometern 21, 22 gezeigten Neigungswinkel, der relevanten Winkelfunktionen sowie der Länge des Gehäuses 25 ist es möglich, sowohl den Ort als auch die Neigung der Gewindestangen 32, 33 in jeder Richtung mit hoher Genauigkeit zu bestimmen. Mit der Kenntnis der Lotleine 27 ist es außerdem möglich, zu bestimmen, in welcher Tiefe eine Gewindestange 32, 33 sich befindet.

Da außerdem die Ausrichtung der Messvorrichtung 20 bekannt sein muss, kann das Gehäuse 25 beispielsweise an einer Reihe von Gewindestangen 32, 33 im Boden 31 ausgerichtet werden.

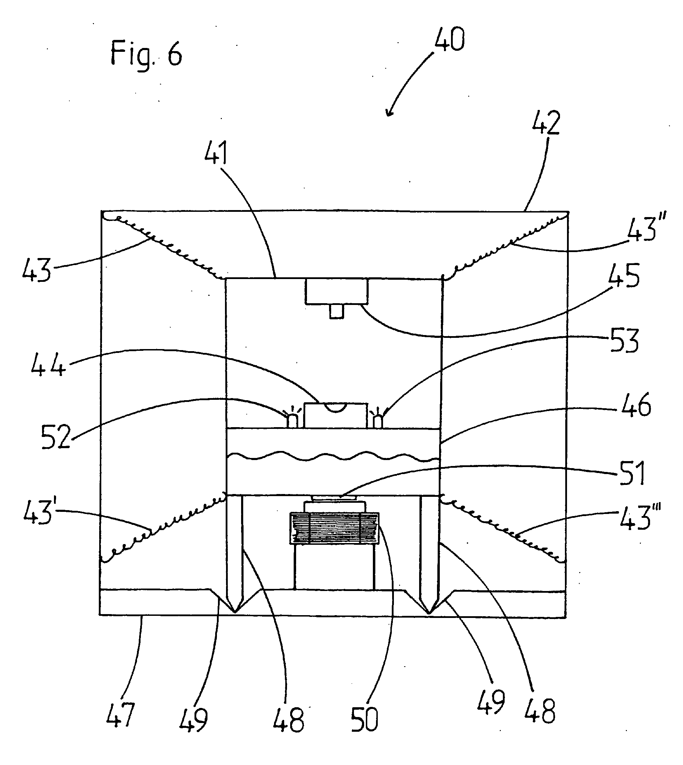

In Fig. 6 ist eine schematische Darstellung eines erfindungsgemäßen Messsystems gezeigt, mit dem Erschütterungen, die etwa beim Einrammen von Rammpfählen für die Unterkonstruktion von Offshore-Windenergieanlagen entstehen, abgefedert werden, eine genaue Messung aber dennoch ermöglicht wird. Übliche Hübe bei einem Rammstoß in der beschriebenen Anwendung sind im Bereich von wenigen Zentimetern. Diese Hübe, die mit einer vergleichsweise hohen Beschleunigung ausgeführt werden, müssen abgefedert und ausgeglichen werden.

In der erschütterungsdämpfenden Halterung 40 sind eine Dosenlibelle 44 und eine auf die Dosenlibelle 44 gerichtete Kamera 45 in einem gemeinsamen Gehäuse 41 untergebracht, das mittels mehrerer Federn 43 - 43'" mit einem äußeren Rahmen 42 verbunden ist. Der äußere Rahmen 42 weist eine Bodenplatte 47 auf, die mit einer Unterkonstruktion, deren Neigung zu messen ist, fest verbunden ist. Statt eines Gehäuses 41 kann auch ein innerer Rahmen vorgesehen sein, wenn die Anwendung dies zulässt.

Innerhalb des Rahmens 42 kann das Gehäuse 41 während des Rammens frei schwingen. Unterhalb des Gehäuses 41 ist ein Flüssigkeitsdämpfer 46 angeordnet, der die Schwingungen des Gehäuses 41 im Rahmen 42 dämpft. Durch die Federaufhängung wird die Beschleunigung während der Rammstöße nicht direkt an die Dosenlibelle 44 und die Kamera 45 weitergegeben, so dass diese vor Dejustage und Beschädigung geschützt sind.

Wenn der Rammvorgang beendet ist und die Neigung des Rammpfahls gemessen werden soll, wird ein Elektromagnet 50 eingeschaltet, der auf einen Permanentmagneten 51 einwirkt, der mit der Unterseite des Gehäuses 41 verbunden ist. Um eine definierte Messposition, wie sie in Fig. 6 dargestellt ist, einzunehmen, verfügt das Gehäuse 41 über Standfüße 48, 48', die insbesondere justierbar sind. Die Standfüße 48, 48' weisen spitze oder kegelförmige Enden auf, die in entsprechende Aufnahmen 49, 49' in der Bodenplatte 47 eingreifen. Diese sind so geformt, dass sie die Standfüße 48, 48' bei der Annäherung in eine definierte Position bringen. Eine geeignete Form ist etwa eine zylindrische Form der Aufnahmen 49, 49'. Es ergibt sich so eine Zwangsführung für die Standfüße 48, 48', die zu einer definierten und reproduzierbaren Positionierung des Gehäuses 41 mit der Dosenlibelle 44 und der Kamera 45 führt.

Um die Dosenlibelle 44 herum im Sichtfeld der Kamera 45 sind mehrere Leuchtdioden 52, 53 angeordnet, die Signalfunktionen übernehmen. Eine erste Leuchtdiode 52 zeigt beispielsweise an, dass das Gehäuse 41 seine definierte Messposition eingenommen hat, wozu beispielsweise Signale von Sensoren oder elektrischen Kontakten verwendet werden, die anzeigen, wenn die Spitzen der Standfüße 48, 48' die Zentren der Aufnahmen 49, 49' erreicht haben. Eine zweite Leuchtdiode 53 zeigt an, ob ein, nicht dargestellter, Erschütterungssensor noch Schwingungen registriert, die eine Messung stören oder untauglich machen würden.

Statt einer Kombination aus einem Elektromagnet und einem Permanentmagnet sind auch andere Betätigungseinrichtungen, wie beispielsweise ausfahrbare Stifte oder Stempel, verwendbar. Ebenso ist es möglich, die Federn 43 - 43'" zu entspannen und das Gehäuse 41 der Schwerkraft folgend in eine Messposition gleiten zu lassen.

## Patentansprüche

1. Elektrooptisches Messsystem zur Messung einer Neigung mit einer Messvorrichtung (40) zur Neigungsmessung und einer von der Messvorrichtung (40) entfernt angeordneten Anzeigevorrichtung, wobei die Messvorrichtung (40) als Messkomponenten wenigstens eine Neigungsanzeigevorrichtung (44) und wenigstens eine auf die Neigungsanzeigevorrichtung (44) gerichtete optische Bilderfassungsvorrichtung (45) umfasst, wobei auf der Anzeigevorrichtung ein von der Bilderfassungsvorrichtung (45) erfasstes Bild der Neigungsanzeigevorrichtung (44) anzeigbar ist wobei die Messvorrichtung (40) ein Gehäuse (41) und vorzugsweise einen gemeinsamen Rahmen (42) umfasst, das die Neigungsanzeigevorrichtung (44) und die Bilderfassungsvorrichtung (45) umschließt oder in dem die Neigungsanzeigevorrichtung (44) und die Bilderfassungsvorrichtung (45) angeordnet sind, **dadurch gekennzeichnet, dass** die in dem Gehäuse (41) und/oder einem gemeinsamen Rahmen (42) angeordneten Messkomponenten (44, 45) von dem Gehäuse oder Rahmen (42) oder einer Vorrichtung, an der das Gehäuse (41) oder der Rahmen (42) befestigt ist, erschütterungsdämpfend entkoppelt sind, wobei eine Positionierungsvorrichtung (48, 48', 49, 49', 50, 51) vorgesehen ist, mittels deren die Messkomponenten (44, 45) in eine Messposition bringbar sind, wobei die Positionierungsvorrichtung (48, 48', 49, 49', 50, 51) zur Positionsdefinition mit dem Gehäuse (41) verbundene Standfüße (48, 48') und eine Bodenplatte (47) mit Aufnahmen (49, 49') für die Standfüße (48, 48') aufweist, wobei die Aufnahmen (49, 49') eine Zwangsführung für die Standfüße (48, 48') darstellen.

2. Elektrooptisches Messsystem nach Anspruch 1, **dadurch gekennzeichnet, dass** die Positionierungsvorrichtung (48, 48', 49, 49', 50, 51) eine schaltbare Betätigungsvorrichtung aufweist, mittels deren das Gehäuse (41) bewegbar ist.

3. Elektrooptisches Messsystem nach Anspruch 2, **dadurch gekennzeichnet, dass** die schaltbare Betätigungsvorrichtung einen herausfahrbaren Stempel oder einen Elektromagneten (50) aufweist.

4. Elektrooptisches Messsystem nach einem der Ansprüche 1 bis 3, dadurch gekenntzeichnet dass die erschütterungsdämpfend entkoppelten Messkomponenten (44, 45) in einem Magnetfeld suspendiert und/oder, insbesondere gekapselt, in Öl schwimmend und/oder mit Federn (43 - 43"') in einer entkoppelten Position haltbar sind.

5. Elektrooptisches Messsystem nach einem der Ansprüche 1 bis 4, **dadurch gekennzeichnet, dass** die mit dem Gehäuse verbundenen Standfüße (48, 48') justierbar sind.

6. Elektrooptisches Messsystem nach einem der Ansprüche 1 bis 5, **dadurch gekennzeichnet, dass** die Aufnahmen (49, 49') der Bodenplatte (47) für die Standfüße (48, 48') kegelförmig sind.

7. Elektrooptisches Messsystem nach einem der Ansprüche 1 bis 6, **dadurch gekennzeichnet, dass** die Neigungsanzeigevorrichtung (44) eine Libelle, insbesondere eine Dosenlibelle (44) oder eine Röhrenlibelle, oder ein Inklinometer umfasst oder eine Libelle (44) oder ein Inklinometer ist.

8. Elektrooptisches Messsystem nach einem der Ansprüche 1 bis 6, **dadurch gekennzeichnet, dass** die optische Bilderfassungsvorrichtung (45) eine optische Kamera oder eine Infrarot-Kamera (45) umfasst oder ist und/oder zur Erfassung von Einzelbildern im optischen oder Infrarot-Bereich ausgebildet ist.

9. Elektrooptisches Messsystem nach einem der Ansprüche 1 bis 8, **dadurch gekennzeichnet, dass** die Messvorrichtung (40) eine auf die Neigungsanzeigevorrichtung (44) gerichtete Lichtquelle, insbesondere für sichtbares Licht oder Infrarot-Licht, umfasst, die insbesondere in oder an der Bilderfassungsvorrichtung (45) angeordnet ist.

10. Elektrooptisches Messsystem nach einem der Ansprüche 1 bis 9, **dadurch gekennzeichnet, dass** die Anzeigevorrichtung zur Speicherung von Einzelbildern und/oder von Bild- oder Filmsequenzen ausgebildet ist oder mit einer Vorrichtung zur Speicherung von Einzelbildern und/oder von Bild- oder Filmsequenzen verbunden ist.

11. Elektrooptisches Messsystem nach einem der Ansprüche 1 bis 10, **dadurch gekennzeichnet, dass** wenigstens ein elektrisches Kabel zur Stromversorgung der Bilderfassungsvorrichtung (45) und/oder Lichtquelle und/oder zur Signalweiterleitung von der Bilderfassungsvorrichtung (45) an die Anzeigevorrichtung vorgesehen ist, wobei insbesondere das wenigstens eine Kabel mit einem Kern oder einer inneren Schutzhülle aus einem zugfesten Material, insbesondere Kevlar, versehen ist.

12. Elektrooptisches Messsystem nach einem der Ansprüche 1 bis 11, **dadurch gekennzeichnet, dass** das Gehäuse (41) einen Deckel aufweist, der mittels Bolzen mit dem Gehäuse verschraubbar ist, wobei insbesondere die Bolzenköpfe verklebt und/oder versiegelt sind und/oder ein Schutzdeckel auf dem Deckel vorgesehen ist, der, insbesondere mittels eines Sicherheitsschlosses, verschließbar ist.

## Claims

1. An electro-optical measurement system to measure an inclination having a measuring apparatus (40) for measuring inclination, and a display apparatus arranged at a distance from the measuring apparatus (40), wherein the measuring apparatus (40), as measuring components, has at least one inclination display apparatus (44), and at least one optical image recording apparatus (45) directed toward the inclination display apparatus (44), wherein an image of the inclination display apparatus (44) recorded by the image recording apparatus (45) can be displayed on the display apparatus, wherein the measuring apparatus (40) comprises a housing (41) and preferably a common frame (42) that encloses the inclination display apparatus (44) and the image recording apparatus (45), or in which the inclination display apparatus (44) and image recording apparatus (45) are arranged, **characterized in that** the measuring components (44, 45) of the housing (41) or frame (42) arranged in the housing (41) and/or a common frame (42), or of a apparatus to which the housing (41) or frame (42) is attached, is decoupled to suppress vibration, wherein a positioning apparatus (48, 48', 49, 49', 50, 51) is provided by means of which the measuring components (44, 45) can be moved into a measuring position, wherein the positioning apparatus (48, 48', 49, 49', 50, 51) to define the position has feet (48, 48') connected to the housing (41) and a baseplate (47) with seats (49, 49') for the feet (48, 48'), wherein the seats (49, 49') constitute forced guidance for the feet (48, 48').

2. The electro-optical measurement system according to claim 1, **characterized in that** the positioning apparatus (48, 48', 49, 49', 50, 51) has a switchable actuation apparatus by means of which the housing (41) can be moved.

3. The electro-optical measurement system according to claim 2, **characterized in that** the switchable actuation apparatus has an extendable plunger or electromagnet (50).

4. The electro-optical measurement system according to one of claims 1 to 3, **characterized in that** the measuring components (44, 45) decoupled to suppress vibration can be held in a decoupled position suspended in a magnetic field, and/or floating in oil especially encapsulated, and/or with springs (43 - 43"').

5. The electro-optical measurement system according to one of claims 1 to 4, **characterized in that** the feet (48, 48') connected to the housing are adjustable.

6. The electro-optical measurement system according to one of claims 1 to 5, **characterized in that** the seats (49, 49') in the baseplate (47) for the feet (48, 40') are conical.

7. The electro-optical measurement system according to one of claims 1 to 6, **characterized in that** the inclination display apparatus (44) comprises a spirit level, especially a circular level (44) or a tubular spirit level or an inclinometer, or is a spirit level (44) or an inclinometer.

8. The electro-optical measurement system according to one of claims 1 to 6, **characterized in that** the optical image recording apparatus (45) comprises or is an optical camera or an infrared camera (45), and/or is designed to record individual images within the optical or infrared range.

9. The electro-optical measurement system according to one of claims 1 to 8, **characterized in that** the measuring apparatus (40) comprises a light source directed towards the inclination display apparatus (44), especially for visible light or infrared light, and in particular is arranged in or on the image recording apparatus (45).

10. The electro-optical measurement system according to one of claims 1 to 9, **characterized in that** the display apparatus is designed to save individual images, and/or image or film sequences, or is connected to a apparatus for saving individual images and/or image or film sequences.

11. The electro-optical measuring system according to one of claims 1 to 10, **characterized in that** at least one electrical cable is provided to supply power to the image recording apparatus (45) and/or light source, and/or to transmit a signal from the image recording apparatus (45) to the display apparatus, wherein in particular at least one cable is provided with a core or an inner protective sheath consisting of a tension-resistant material, especially Kevlar.

12. The electro-optical measurement system according to one of claims 1 to 11, **characterized in that** the housing (41) has a cover that can be screwed to the housing by means of bolts, wherein especially the bolt heads are glued and/or sealed, and/or a protective cover is provided on the cover that can be locked, especially with a safety lock.

## Revendications

1. Système de mesure électro-optique pour la mesure d'une inclinaison, avec un dispositif de mesure (40) pour mesurer l'inclinaison et un dispositif d'affichage agencé à distance du dispositif de mesure (40), dans lequel le dispositif de mesure (40) comprend, en tant que composants de mesure, au moins un dispositif d'affichage d'inclinaison (44) et au moins un dispositif optique de détection d'image (45) orienté vers le dispositif d'affichage d'inclinaison (44), dans lequel une image du dispositif d'affichage d'inclinaison (44) détectée par le dispositif de détection d'image (45) peut être affichée sur le dispositif d'affichage, dans lequel le dispositif de mesure (40) comprend un boîtier (41) et de préférence un cadre commun (42) entourant le dispositif d'affichage d'inclinaison (44) et le dispositif de détection d'image (45) ou dans lequel le dispositif d'affichage d'inclinaison (44) et le dispositif de détection d'image (45) sont agencés, **caractérisé en ce que** les composants de mesure (44, 45) agencés dans le boîtier (41) et/ou dans un cadre commun (42) sont désaccouplés du boîtier ou du cadre (42) ou d'un dispositif sur lequel est fixé le boîtier (41) ou le cadre (42), de façon à amortir les secousses, dans lequel il est prévu un dispositif de positionnement (48, 48', 49, 49', 50, 51) au moyen duquel les composants de mesure (44, 45) peuvent être mis dans une position de mesure, dans lequel, pour définir la position, le dispositif de positionnement (48, 48', 49, 49', 50, 51) comporte des pieds (48, 48') reliés au boîtier (41) et une plaque de fond (47) avec des admissions (49, 49') pour les pieds (48, 48'), dans lequel les admissions (49, 49') présentent un guidage forcé pour les pieds (48, 48').

2. Système de mesure électro-optique selon la revendication 1, **caractérisé en ce que** le dispositif de positionnement (48, 48', 49, 49', 50, 51) comporte un dispositif d'actionnement commutable au moyen duquel le boîtier (41) peut être déplacé.

3. Système de mesure électro-optique selon la revendication 2, **caractérisé en ce que** le dispositif d'actionnement commutable comporte un vérin extractible ou un électroaimant (50).

4. Système de mesure électro-optique selon l'une des revendications 1 à 3, **caractérisé en ce que** les composants de mesure (44, 45) désaccouplés de manière à amortir les secousses sont suspendus dans un champ magnétique, en particulier encapsulés, flottent dans de l'huile et/ou peuvent être maintenus dans une position désaccouplée avec des ressorts (43 - 43"').

5. Système de mesure électro-optique selon l'une des revendications 1 à 4, **caractérisé en ce que** les pieds (48, 48') reliés au boîtier sont réglables.

6. Système de mesure électro-optique selon l'une des revendications 1 à 5, **caractérisé en ce que** les admissions (49, 49') de la plaque de fond (47) pour les pieds (48, 48') sont coniques.

7. Système de mesure électro-optique selon l'une des revendications 1 à 6, **caractérisé en ce que** le dispositif d'affichage d'inclinaison (44) comprend un niveau à bulle, en particulier une nivelle sphérique (44) ou une nivelle tubulaire ou un inclinomètre, ou est un niveau à bulle (44) ou un inclinomètre.

8. Système de mesure électro-optique selon l'une des revendications 1 à 6, **caractérisé en ce que** le dispositif optique de détection d'image (45) comprend ou est une caméra optique ou une caméra infrarouge (45) et/ou est conçu pour détecter des images individuelles dans la plage optique ou infrarouge.

9. Système de mesure électro-optique selon l'une des revendications 1 à 8, **caractérisé en ce que** le dispositif de mesure (40) comprend une source de lumière orientée vers le dispositif d'affichage d'inclinaison (44), en particulier pour la lumière visible ou la lumière infrarouge, en particulier agencée dans ou sur le dispositif de détection d'image (45).

10. Système de mesure électro-optique selon l'une des revendications 1 à 9, **caractérisé en ce que** le dispositif d'affichage est conçu pour le stockage d'images individuelles et/ou de séquences d'images ou de film, ou est relié à un dispositif pour le stockage d'images individuelles et/ou de séquences d'images ou de film.

11. Système de mesure électro-optique selon l'une des revendications 1 à 10, **caractérisé en ce qu'**il est prévu au moins un câble électrique pour l'alimentation électrique du dispositif de détection d'image (45) et/ou de la source de lumière et/ou pour la transmission de signaux du dispositif de détection d'image (45) au dispositif d'affichage, dans lequel en particulier l'au moins un câble est pourvu d'un noyau ou d'une gaine de protection intérieure constituée d'un matériau résistant à la traction, en particulier le kevlar.

12. Système de mesure électro-optique selon l'une des revendications 1 à 11, **caractérisé en ce que** le boîtier (41) comporte un couvercle vissable sur le boîtier à l'aide de vis d'assemblage, dans lequel les têtes de vis sont collées et/ou soudées et/ou un couvercle de protection est prévu sur le couvercle, lequel peut être fermé, en particulier au moyen d'un verrou de sécurité.
